# EUROPEAN PATENT APPLICATION

(11) **EP 4 517 715 A1**
(43) Date of publication of application: **05.03.2025**
(21) Application number: 23795896.2
(22) Date of filing: 28.02.2023
(51) Int. Cl.: G08G 5/04, B64C 27/08, B64C 39/02, G05D 1/10

(54) **ROUTE GENERATION DEVICE, ROUTE GENERATION METHOD, COMPUTER PROGRAM, AND MOBILE BODY MANAGEMENT SYSTEM**

(30) Priority: 27.04.2022 JP 2022073560
(71) Applicant: Flight Pilot Co., Ltd, Sasebo-shi, Nagasaki 859-6101 (JP)
(72) Inventor: KAWAKAMI, Takayuki, Sasebo-shi, Nagasaki 859-6101 (JP); TERUOKA, Masaki, Sasebo-shi, Nagasaki 859-6101 (JP)
(74) Representative: Serjeants LLP
(86) International application number: PCT/JP2023/007343
(87) International publication number: WO 2023/210148

(57) **Abstract**

A route generation device stores region data formed by a plurality of spatial regions configured to serve as a movement route of a mobile body, and status data indicating a status used to determine whether movement is possible at each timing in each of the spatial regions; and configured to execute: a step of receiving, a departure point and a destination of a mobile body, and conditions of the mobile body including at least information for specifying a travel speed, a step of extracting, as a movement target, a plurality of spatial regions including a route from the departure point to the destination, a step of changing a status of a spatial region extracted as a movement target of the mobile body in the status data in consideration of each timing according to a travel speed of the mobile body, and a step of transmitting, information on a spatial region of the movement target and a spatial region in proximity in association with each of the timings to a control device of the mobile body.

## Description

### TECHNICAL FIELD

The present disclosure relates to a route generation device, a route generation method, a computer program, and a mobile body management system that generate a movement route of a mobile body.

### BACKGROUND ART

In recent years, the use of drones has been rapidly promoted, and the use field has been expanded, and it is expected that the use of drones will increase more and more also in the future. On the other hand, with the expansion of the use of drones, safer flight is required. For example, currently, there is no problem of collision between drones due to restriction of the use range and the like. However, in the future, when the use of drones expands and the number of flying drones increases, it is expected that the number of problems to be solved also increases.

In addition, when the use of drones is expanded, it is necessary to consider not only the influence between drones but also collision with various flight vehicles such as aircraft including airplanes and helicopters. Patent Document 1 discloses an aircraft guidance technique that automatically provides appropriate flight information for each minute airspace.

### PRIOR ART DOCUMENT

### PATENT DOCUMENT

Patent Document 1: JP-A-H10-241100

### SUMMARY OF THE INVENTION

### PROBLEMS TO BE SOLVED BY THE INVENTION

In the technique described in Patent Document 1, the generation of a flight route from a departure point to a destination is not considered. In addition, in addition to a flight vehicle such as a drone, a vehicle such as an automobile, a ship including a submersible, and the like are also under development of automatic or remote driving, and similarly, it is necessary to generate a route. The present disclosure provides a route generation device, a route generation method, a computer program, and a mobile body management system that generate a movement route from a departure point to a destination of a mobile body in consideration of a problem that is assumed to need to be solved in accordance with the use of mobile bodies such as drones.

### SOLUTIONS TO THE PROBLEMS

A route generation device of the present disclosure is a route generation device that includes a computing device and a storage device and generates a movement route of a mobile body. The storage device stores: spatial region data formed by a plurality of spatial regions configured to serve as a movement route of a mobile body, and status data indicating a status used to determine whether movement is possible at each timing in each of the spatial regions. The computing device executes: a step of receiving, through a receiving means, a departure point and a destination of a mobile body, and conditions of the mobile body including at least information for specifying a travel speed, a step of extracting, as a movement route, a plurality of spatial regions including a route from the departure point to the destination for the mobile body under the conditions, a step of changing a status of a spatial region extracted as a movement route of the mobile body in the status data in consideration of each timing according to a travel speed of the mobile body, and a step of transmitting, through a transmission means, information on a spatial region of the movement route and a spatial region in proximity in association with each of the timings to a control device of the mobile body.

A route generation device of the present disclosure is a route generation device that includes a computing device and a storage device and generates a movement route of a mobile body. The storage device stores: region data formed by a plurality of spatial regions configured to serve as a movement route of a mobile body, and status data indicating a status used to determine whether movement is possible at each timing in each of the spatial regions. The computing device executes: a step of receiving, through a receiving means, a departure point and a destination of a mobile body, and conditions of the mobile body including at least information for specifying a travel speed, a step of referring to the region data and the status data, extracting a plurality of continuous spatial regions available for movement of a mobile body under the conditions from the departure point to the destination, and generating a movement route, a step of changing a status for distinguishing between movability and non-movability at each timing in a plurality of spatial regions extracted as a movement route of the mobile body in the status data in consideration of each timing according to a travel speed of the mobile body, and a step of transmitting, to a control device of the mobile body through a transmission means, information on a spatial region and a spatial region in proximity, of the movement route defined by the extracted movement route and the status data in association with each of the timings.

Another route generation device of the present disclosure is a route generation device that includes a computing device and a storage device and generates a movement route of a mobile body. The mobile body is a drone. The storage device stores: region data formed by a plurality of spatial regions configured to serve as a movement route of a mobile body, and status data that is set according to at least presence or absence of flight of a mobile body and environment, distinguishes at least movability or non-movability at each timing in each of the spatial regions, and indicates a status used to determine whether movement is possible. Each spatial region of the region data is represented by a curve according to a ground condition. The status data is updated in accordance with a change in the environment. The computing device executes: a step of receiving, through a receiving means, a departure point and a destination of a mobile body, and conditions of the mobile body including at least information for specifying a travel speed, a step of referring to the region data and the status data, extracting a plurality of continuous spatial regions available for movement of a mobile body under the conditions from the departure point to the destination, and generating a movement route, a step of changing a status for distinguishing between movability and non-movability at each timing in a plurality of spatial regions extracted as a movement route of the mobile body in the status data in consideration of each timing according to a travel speed of the mobile body, and a step of transmitting as flight data, to a control device of the mobile body through a transmission means, information on a spatial region and a spatial region in proximity, of the movement route defined by the extracted movement route and the status data in association with each of the timings.

These general and specific aspects may be implemented by a system, a method, a computer program, and a combination thereof.

### EFFECTS OF THE INVENTION

According to the route generation device, the route generation method, the computer program, and the mobile body management system of the present disclosure, it is possible to generate the route of the mobile body according to the conditions of the mobile body and the environment in which moving is made.

### BRIEF DESCRIPTION OF THE DRAWINGS

[Fig. 1] Fig. 1 is a block diagram showing a configuration of an aerial management system including a flight route generation device of the present disclosure.
[Fig. 2] Fig. 2 is a block diagram showing a configuration of a flight route generation device of the present disclosure.
[Fig. 3A] Fig. 3A is a conceptual diagram illustrating an example of a spatial region.
[Fig. 3B] Fig. 3B is a conceptual diagram illustrating a traveling direction in the spatial region in Fig. 3A.
[Fig. 4] Fig. 4 is a conceptual diagram illustrating an example of a flight route.
[Fig. 5] Fig. 5 is a diagram showing an example of conditions used for generating a flight route and contents determined by the conditions.
[Fig. 6] Fig. 6 is a block diagram showing a configuration of a control terminal used for controlling a flight vehicle.
[Fig. 7] Fig. 7 is an example of a display screen displayed on a control terminal.
[Fig. 8] Fig. 8 is an example of a frequency band used by the flight route generation device.
[Fig. 9] Fig. 9 is a flowchart illustrating a flight route generation method.
[Fig. 10] Fig. 10 is an example of a frequency band when the flight route generation device is used in each country.

### DETAILED DESCRIPTION

A route generation device, a route generation method, a computer program, and a mobile body management system according to the present embodiment generate a route from a departure point to a destination of a mobile body on the conditions of the mobile body. In the present embodiment, the mobile body is assumed to be a drone such as a multicopter, and a description will be given using an example of generating a flight route that can be managed by an aerial management system of a flight vehicle.

### <Aerial Management System>

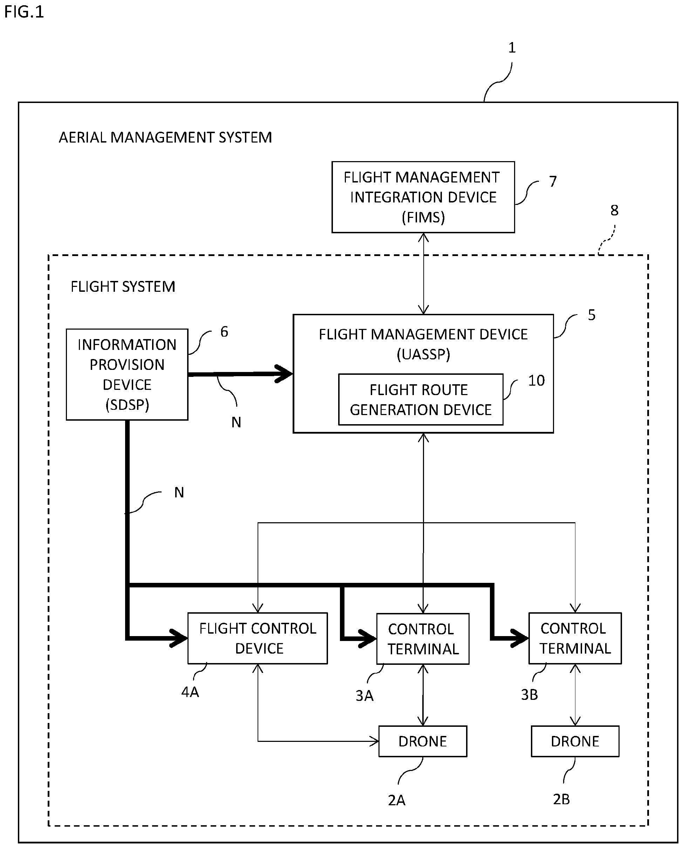

As shown in Fig. 1, the aerial management system 1 includes drones 2A and 2B, control terminals 3A and 3B, a flight control device 4A, a flight management device 5, an information provision device 6, and a flight management integration device 7. Although Fig. 1 shows two drones 2A and 2B and control terminals 3A and 3B respectively corresponding thereto, this is an example, and the number of drones that can be managed by the aerial management system 1 is not limited. In addition, although only one flight control device 4A is shown in Fig. 1, this is also an example. It should be noted that hereinafter unless otherwise specified, the drone 2, the control terminal 3, and the flight control device 4A will be described.

The drone 2 includes, for example, a rotary wing and a motor, a communication apparatus that transmits and receives signals to and from the control terminal 3 and the flight control device 4, a flight controller that controls the attitude, speed, and the like of the drone 2, and a battery that supplies power to each apparatus. The drone 2 flies under control according to a signal received from the corresponding control terminal 3. In addition, the drone 2 is also controlled by a signal received from the corresponding flight control device 4.

The control terminal 3 is, for example, a remote controller including an operation lever for performing an operation of raising and lowering the drone 2, an operation of moving the drone 2 back and forth and left and right, and an operation of turning the drone 2 left and right. The control terminal 3 includes a transmitter and transmits a control signal to the drone 2 using wireless communication when generating the control signal according to an operation of an operator. In addition, the control terminal 3 may be connected to a display capable of displaying necessary information.

The flight control device 4 is, for example, an information processing device such as a personal computer used by an operator for operating the drone 2 together with or instead of the control terminal 3. The flight control device 4 can execute the same operation as the control terminal 3 and can display information that can be displayed on the control terminal 3. It should be noted that although omitted in Fig. 1 for simplification, the flight control device may be connected also to the drone 2B.

The flight management device 5 transmits information necessary for the flight of the drone 2 to the control terminal 3 and the flight control device 4 using the information provided from the information provision device 6 and the flight management integration device 7. The flight management device 5 is what is called an unmanned aircraft system service provider (UASSP), and can include a flight route generation device 10 that generates a flight route according to the present disclosure. The flight route generation device 10 will be described below.

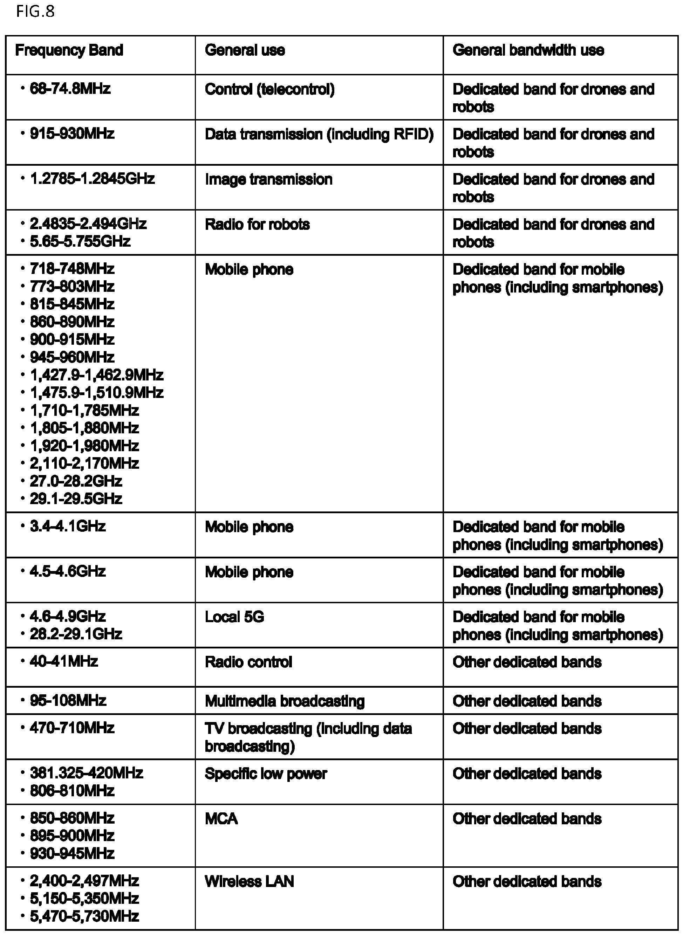

The information provision device 6 is communicably connected to the control terminal 3, the flight control device 4, and the flight management device 5 through the network N, and provides various types of information for assisting the flight of the drone 2. The network N connecting the information provision device 6 to the control terminal 3, the flight control device 4, and the flight management device 5 preferably uses a specific frequency band as described below with reference to Fig. 8, for example. The information provision device 6 is what is called a supplementary data service provider (SDSP), and specifically provides weather information and map information. In addition, the information provision device 6 can provide occurrence information of an emergency situation when the emergency situation such as the occurrence of a disaster occurs.

One flight system 8 is formed by the drone 2 and respective components 3 to 6 described above. It should be noted that although omitted in Fig. 1, the aerial management system 1 can include a plurality of the flight systems 8. In addition, the flight management integration device 7 is connected to a plurality of flight systems 8. The flight management integration device 7 is what is called a flight information management system (FIMS), is connected to each flight management device 5, and executes communication of information for integrating the flight of the drone 2 in each flight system 8. It should be noted that the connection between the flight management device 5 and the flight management integration device 7 may be either wired or wireless.

It should be noted that all the drones 2 included in the same flight system 8 are mounted with application programs of the same standard defined by the flight management device 5. Accordingly, the flight management device 5 can manage the flights of all the drones 2 included in the same flight system 8. It should be noted that since the application program operates on an operating system (OS) designed exclusively for the drone, for example, information such as own-aircraft position information and flight speed obtained from a sensor such as a GPS can be sent to the flight management device 5 via the control terminal 3 or the flight control device 4 with low delay and high accuracy. In addition, when there are not only drones 2 included in the same aerial system but also a plurality of flight systems 8, application programs of the same standard are preferably mounted on the plurality of drones 2 included in the plurality of flight systems 8. Accordingly, the flight management devices 5 of the plurality of flight systems 8 in the aerial management system 1 can cooperate with each other to achieve safe flight of the drone 2.

### <Flight Route Generation Device>

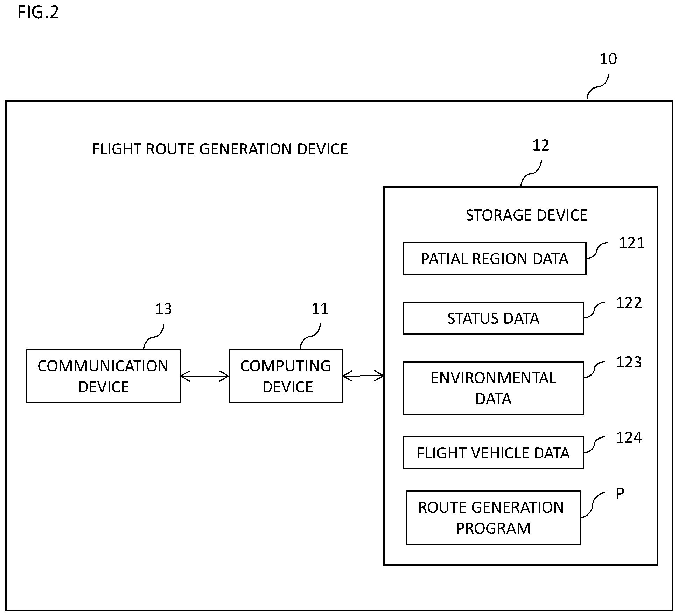

The flight route generation device 10 generates a flight route of the flight vehicle. As shown in Fig. 2, the flight route generation device 10 is a general information processing device including a computing device 11, a storage device 12, and a communication device 13.

The computing device 11 is a controller that controls the entire flight route generation device 10. For example, the computing device 11 reads and executes the route generation program P stored in the storage device 12, thereby implementing various types of processing for executing the generation of the flight route. In various types of processing, it is possible to generate a safer route by effectively using own-aircraft position information with low-delay and high-accuracy or the like having been transmitted from the control terminal 3 or the like. In addition, the computing device 11 is not limited to one that implements a predetermined function by cooperation of hardware and software, and may be a hardware circuit designed exclusively for implementing a predetermined function. That is, the computing device 11 can be implemented by various processors such as a CPU, an MPU, a GPU, an FPGA, a DSP, and an ASIC.

The communication device 13 is a communication means for enabling data communication with external devices (for example, the control terminal 3, the flight control device 4, the information provision device 6, the flight management integration device 7, and the like). The data communication described above is wired and/or wireless data communication and can be performed according to a known communication standard. For example, wired data communication is performed by using, as the communication device 13, a communication controller of a semiconductor integrated circuit that operates in conformity with the Ethernet (registered trademark) standard, the USB (registered trademark) standard, and/or the like. In addition, wireless data communication is performed by using, as the communication device 13, a communication controller of a semiconductor integrated circuit that operates in conformity with IEEE 802.11 standards related to a local area network (LAN) and/or a fourth/fifth generation mobile communication system, what is called 4G/5G, related to mobile communication. It should be noted that when a transmission protocol such as TCP/IP is used for the data communication, each piece of digital information is put together into a block referred to as a packet, and the packet is transmitted via a large number of relays. In this case, a delay of nearly one second may occur depending on the distance. The software mounted on the computing device 11 may equivalently cancel these delays by predicting and estimating the current actual machine position. That is, the computing device 11 may enable canceling the delay caused by the remote communication by using prediction and/or estimation.

The storage device 12 is a recording medium that records various types of information. The storage device 12 is implemented by, for example, a RAM, a ROM, a flash memory, a solid state drive (SSD), a hard disk drive, another storage device, or an appropriate combination thereof. The storage device 12 stores a route generation program P which is a computer program executed by the computing device 11, various types of data used for executing the generation of the flight route, and the like. For example, the storage device 12 stores the spatial region data 121, the status data 122, the environmental data 123, the flight vehicle data 124, and the like.

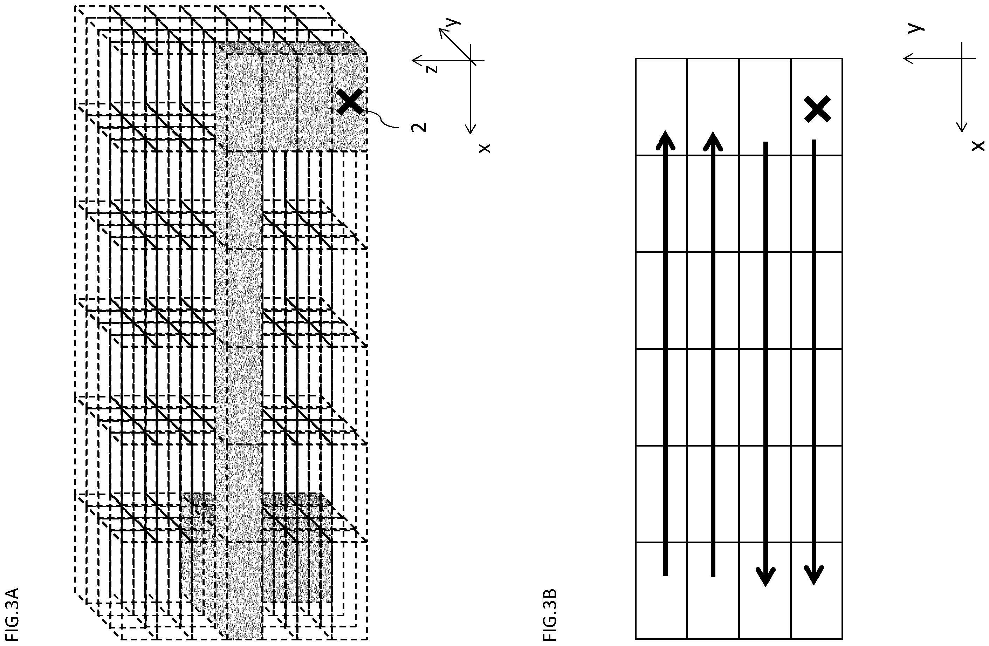

The spatial region data 121 indicates a plurality of spatial regions that can be flight routes. Fig. 3A shows some of the plurality of spatial regions included in the spatial region data 121. For example, in the aerial management system 1, in a predetermined region on the ground that can be a flight route of the drone 2, a plurality of spatial regions of a predetermined size are set for each three-dimensional direction as shown in Fig. 3A. In addition, selected continuous spatial regions among a plurality of regions having a predetermined size as shown in Fig. 3A are the flight route of the drone 2. For example, the spatial region data 121 may include a spatial region having a height lower than the altitude above ground level (currently, 150 m in Japan) at which the drone 2 can fly. It should be noted that hereinafter, description will be given with the traveling direction of the drone 2 when the drone 2 moves to the flight height as an x direction, the direction crossing the traveling direction as a y direction, and the height direction from the ground as a z direction.

Here, a traveling direction is determined in each spatial region. Fig. 3B shows an example of a top view (xy plane) of the spatial regions shown in Fig. 3A. As shown in an example in Fig. 3B, since it is defined that the drone 2 travels in one direction in spatial regions continuous in a row, the spatial region data 121 can include a traveling direction in each spatial region.

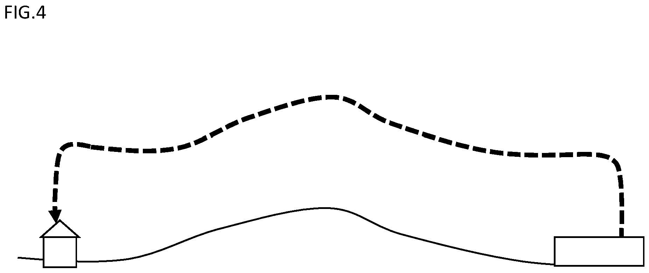

Here, the flight route formed by a plurality of continuous spatial regions is represented by a smooth curve according to the shape of an obstacle on the ground. Specifically, in the flight route, a curve in the vertical direction is formed by a vertical curve according to the shape of an obstacle or the like on the ground including the characteristic of the terrain, and a curve in the horizontal direction is formed by a clothoid curve according to the shape of the flyable region on the ground. Fig. 3A is an example of a flight route and is an example of a straight line even in the sky. However, in reality, the flight route is set in a flyable region determined by the altitude above ground level and/or the height at which the flight permission is issued. Therefore, for example, as shown in Fig. 4, the flight route is set according to the unevenness of land such as a mountain and a valley. In addition, the flight route ascends toward the sky from the departure point and descends at the destination. Therefore, when represented in the xz plane, a flight route represented by a curve is defined in the spatial region data 121. Furthermore, even when considered in the xy plane, it is not possible to fly in a straight line from the departure point to the destination according to the limitation of the flyable region, and thus, a flight route represented by a three-dimensional curve is obtained.

For example, when the traveling direction of the drone 2 is an x direction, the direction crossing the traveling direction is a y direction, and the height direction from the ground is a z direction, the size of each spatial region can be at least 20 m or more in the x direction, at least 3 m or more in the y direction, and at least 4 m or more in the z direction. This is a size that allows the drone 2 to maintain a flyable distance without interfering with another drone 2 flying in another adjacent spatial region, and also allows even a passenger car traveling on a road or a drone having a size of a passenger car to travel or fly. Therefore, even if the drone 2 can fly in a manned state, the drone 2 can fly with this spatial region as a reference. It should be noted that as described above, the flight route is represented by a smooth curve. Therefore, each spatial region is not formed as a rectangular parallelepiped but is formed as a curve according to the terrain, an obstacle on the ground, and the like. For example, when the length of each side of x, y, and z is defined as 20, 3, and 4 m with respect to the spatial region, it is assumed that the spatial region is formed by a smooth curve. At this time, the spatial region is formed so that the shortest length of the side in the x direction is 20 m and the lengths of the other sides are extended accordingly.

The spatial region data 121 is generated in advance and stored in the storage device 12. It should be noted that, if there is a change in terrain or the like, the update may be made with new spatial region data after the change.

The status data 122 indicates the status of each spatial region. The status data 122 associates, for example, identification information of each spatial region, information indicating whether the drone 2 can fly in the spatial region, and time information during which the flight is prohibited when the flight in the spatial region is prohibited. Specifically, there is a region in which the flight of the drone 2 is limited in the spatial region. As an example, there is a region where the entry of the drone 2 is prohibited by the aviation law or the small unmanned aerial vehicle flight prohibition law. In addition, there is also a region where only the permitted drone 2 is allowed to enter. Furthermore, there is a region that cannot be intruded because another drone 2 is flying. In addition, since another drone 2 is close to the region in flight, there is a region affected by the downdraft generated by the other drone 2. In addition, there are regions where flight is temporarily prohibited under weather conditions such as strong winds, typhoons, and heavy rain, and where flight is temporarily prohibited at the time of disaster. Therefore, the status data 122 includes time information at which that status is applied, along with a status relating to limitations of flight for a spatial region as described above.

The status included in the status data 122 can at least distinguish between being enabled to fly and being disabled to fly. For example, the status of a spatial region where flight around an airport or the like is limited is fixed. On the other hand, the status may be different depending on the timing, or the condition of the drone 2. Specifically, when flight is limited due to weather conditions, a flight state of another drone, or the like, the status of the spatial region can be changed according to the timing thereof. In addition, depending on the spatial region, there may be a case where only the permitted drone 2 is enabled to fly or a case where any drone 2 with high performance is enabled to fly even if the weather conditions are not favorable. Therefore, the status data 122 includes identification information for identifying each spatial region, time information, and a status of the spatial region in the identification information and the time information.

As described above, the status data 122 changes greatly depending on the timing, and thus, is updated at the timing when the factor of the change in the status data 122 occurs. As will be described in detail below, for example, the status data 122 can be updated at the timing when the environmental information is acquired from the information provision device 6, the timing when the flight route of the drone 2 is newly generated, and the like.

The environmental data 123 is data in which the environmental information provided from the information provision device 6 is accumulated. The environmental information is data that associates a phenomenon that can occur in the environment with information indicating a spatial region where the phenomenon is occurring or can occur. For example, when a typhoon is scheduled to occur, the environmental information includes, as a phenomenon, identification information of "typhoon" and identification information of "area" where the typhoon is scheduled to occur. It should be noted that depending on the content of the information, the information may be reflected in the status data 122. As described above, environmental information such as a strong wind, a typhoon, and a heavy rain is included in the status data 122 in association with a spatial region where the strong wind, the typhoon, and the heavy rain are occurring or can occur.

The flight vehicle data 124 is data indicating conditions such as the performance of the flight vehicle that has generated the flight route. The flight vehicle data 124 can include the performance of the flight vehicle included as a request to generate a flight route, and includes at least the performance of the flight vehicle until the flight vehicle that has generated the flight route lands.

The computing device 11 receives the environmental information transmitted from the information provision device 6 through the communication device 13. Since the environmental information may be changed at all times, the computing device 11 may receive the environmental information at any time according to the update of the environmental information. In addition, the computing device 11 adds the received environmental information and updates the environmental data 123. Furthermore, the computing device 11 may update the status data 122 using the environmental information.

The computing device 11 receives a flight route generation request transmitted from the control terminal 3 or the flight control device 4 through the communication device 13. This generation request includes a departure point and a destination of the drone 2, and conditions of the drone 2 that include at least information specifying an own-aircraft position and a flight speed based on GPS or the like. The departure point and the destination of the drone can include, for example, an address of each point. In addition, the latitude and longitude of each point can be included.

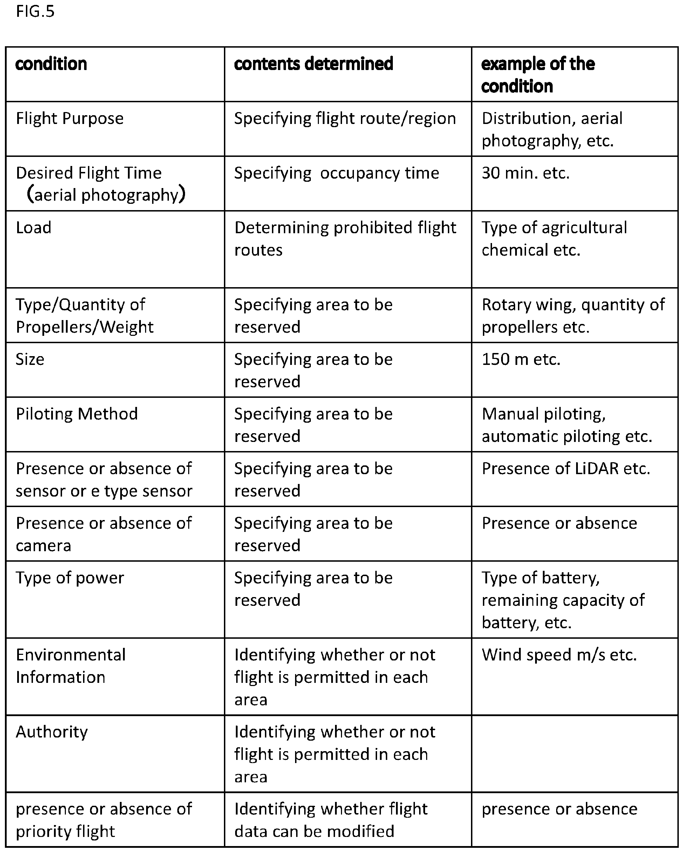

The computing device 11 extracts, as flight targets, a plurality of spatial regions including a route from a departure point to a destination of the drone 2 under the received conditions. In addition, when extracting the spatial region of the flight target, the computing device 11 determines the flight route that meets the conditions using various types of information such as environmental information provided from the information provision device 6 together with the spatial region data 121 and the status data 122. It should be noted that the determination of the flight route using the drone conditions will be described below with reference to Fig. 5. Here, the computing device 11 extracts a spatial region serving as the flight target of another drone 2, and at a position separated by a predetermined distance, a spatial region serving as the flight target of the target drone 2. Therefore, for example, the computing device 11 extracts the spatial region of the flight target excluding the spatial region allocated to another drone 2 at the same timing and the spatial region affected by another drone. Accordingly, the flight route generation device 10 can determine a flight route on which the drone 2 desiring flight can safely fly.

For example, the computing device 11 extracts a plurality of continuous spatial regions used in the ascent movement from the departure point to the height at which the drone 2 flies. In addition, the computing device 11 extracts a plurality of continuous spatial regions which the drone 2 goes through in flight from the sky above the departure point to the sky above the destination. The plurality of continuous spatial regions does not need to be straight lines and may have a curve defined in the spatial region data 121. Furthermore, the computing device 11 extracts a plurality of continuous spatial regions used by the drone 2 in the descent movement from the sky above the destination to the height of the destination. For the linear movement of the drone, the computing device 11 determines a plurality of spatial regions in series serving as the flight route as a flight route. However, when a curve occurs, the computing device may extract even the spatial regions around the curve as the flight region. For example, "layer movement" occurs at the time of ascent from the departure point to the sky or descent from the sky above the destination to the destination. In addition, "layer movement" or "curve" occurs in various situations such as flight for avoiding a region where flight is limited, flight according to the altitude above ground level, and flight when a flight route is set along a road.

The computing device 11 extracts, from the plurality of spatial regions included in the spatial region data 121, a plurality of spatial regions serving as shortest movable routes from the departure point to the destination. At this time, the computing device 11 extracts a plurality of continuous shortest movable spatial regions in consideration of the traveling direction together with conditions described below with reference to Fig. 5. That is, since the traveling direction is defined in each spatial region as described above, the computing device 11 extracts a plurality of spatial regions in consideration of the traveling direction.

It should be noted that, although description is omitted here, after the drone 2 arrives at the destination, a departure point and a destination are newly set, and a plurality of regions of the flight target are newly generated. For example, the last-time destination becomes a new departure point, the last-time departure point becomes a new destination, a plurality of spatial regions are newly extracted as flight targets, and the drone 2 can return to the original place along the plurality of flight regions. The plurality of spatial regions newly extracted as the flight targets may be different from the plurality of last-time extracted regions. That is, the outbound and return routes may not be the same due to the influence of the flight route of another drone 2 at that timing, weather conditions, and the like.

In addition, if any one of the spatial regions of flight targets serving as the routes of the drone 2 from a departure point to a destination is a flight target of another drone 2 at the same timing, the computing device 11 sets the timing of flight so that the drone 2 waits in any one of the spatial regions before proceeding to the spatial region serving as the flight target and enters the spatial region after the other drone 2 proceeds. Here, the computing device 11 may be defined in a plurality of predetermined unit times, and each timing may be specified using the unit time.

In the status data 122, the computing device 11 changes the status of the extracted spatial region of the flight target of the drone 2 and the close spatial region at each timing in accordance with the flight speed of the drone 2. Accordingly, in the generation of the flight route of another drone 2 later, the flight route generation device 10 can avoid overlapping use of the spatial region already used as the flight route and achieve the generation of safe flight routes of the plurality of drones 2.

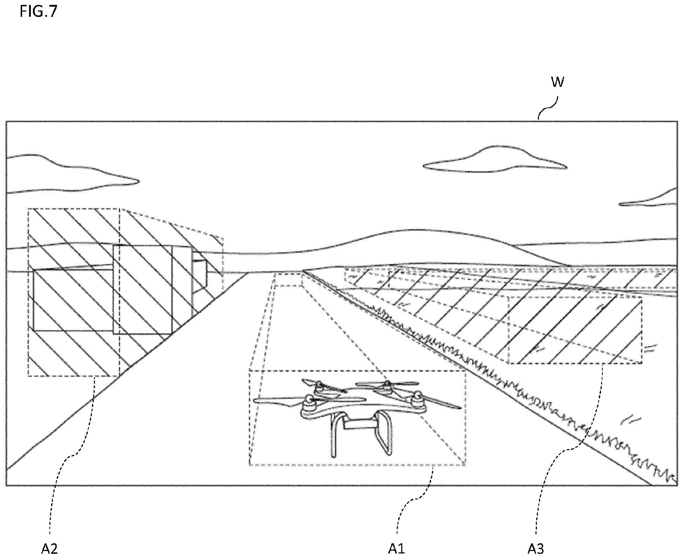

The computing device 11 transmits, as flight data, information on a spatial region of a flight target and a spatial region in proximity that are flight routes in association with each timing to the control terminal 3 that is a control device of the drone 2 through the communication device 13. Accordingly, in the control terminal 3, for example, as shown in Fig. 7, it is possible to grasp the spatial region where the drone 2 is present at each timing and it is possible to confirm how the drone 2 flies. In addition, by acquiring also the information regarding the spatial region in proximity, it is possible to check also what state the spatial region flying at each timing is, and it is possible to further call attention to the operator. For example, it is possible to easily grasp that another drone 2 flies in a spatial region where the drone 2 to be controlled flies and a spatial region in proximity, or that the drone 2 is in a no-fly zone.

It should be noted that when a change factor of the flight route occurs, even when the flight route and the information, as related information, regarding the spatial region in proximity have already been transmitted to the control terminal 3, the computing device 11 extracts a new flight route by the above-described method and transmits the generated new flight route to the control terminal 3. The change factor of the flight route is, for example, a timing at which environmental information is newly acquired or a timing at which a flight route of another drone 2 which is a priority aircraft to be described below is generated. In such a case, the computing device 11 compares the conditions of the target drone 2 included in the flight vehicle data 124 with the newly acquired environmental information or the conditions of another drone 2 which is the priority aircraft, and generates a new flight route when affected by these changes. For example, when determining that there is a forecast that wind with a wind speed that the performance of the drone 2 cannot withstand in flight occurs, the computing device 11 extracts a new route that is not affected by the wind.

Fig. 5 shows a condition, contents determined using the condition, and an example of the condition.

### <<Flight Purpose>>

The conditions of the drone include the flight purpose of the drone 2. The computing device 11 extracts a spatial region according to the flight purpose. Examples of the flight purpose include distribution, aerial photography, spraying of agricultural chemicals and the like, security, surveying, and investigation. For example, when the flight purpose of the drone 2 is "distribution", a plurality of spatial regions serving as routes on which the drone 2 flies from the departure point to the destination are extracted. In addition, when the purpose of flight of the drone 2 is "aerial photography", a plurality of spatial regions including a range of an aerial photographing target and a range for movement are extracted as flight targets. Specifically, it may be a combination of an aerial photographing region including a plurality of spatial regions (for example, a spatial region of 5 × 10 × 5 m or the like in the xyz direction) and a region serving as a route from a departure point used for the movement to the aerial photographing region. In the case of such aerial photography, the destination may be the same as the departure point, and a plurality of regions in which moving is made from the departure point to the region to be used in the aerial photography and returning is made again therefrom to the same destination as the departure point are extracted as flight targets. In addition, even in the case of aerial photography, the departure point and the destination may be different, and after the aerial photography is finished, moving may be made to a destination at a position different from the departure point.

### <<Desired Flight Time and Region>>

The conditions of the drone can include the desired flight time and region of the drone 2. The "desired flight time and region" is a condition included in the case of aerial photography, includes time and region information, and indicates how long a time and in which region photographing is desired. For example, the time can be indicated by a range of hours. In addition, the region can be indicated by an address, the name of a region in flight, and the like.

### <<Load>>

The conditions of the drone 2 can include the type of the load. The "type of load" is a condition included when the purpose of the flight is distribution, spraying of agricultural chemicals, or the like, and is used to select whether or not a flight route is permitted to be used. For example, when the drone 2 loads agricultural chemicals for spraying agricultural chemicals and flies, the agricultural chemicals loaded by the drone 2 are determined to be a dangerous article, and the flyable route may be limited. Therefore, it is used to determine the flight route according to the load.

### <<Type/Quantity of Propellers/Weight>>

The conditions of the drone may include at least any one of the type of the drone, the quantity of propellers of the drone, or the weight of the drone. "Type of drone" is a type of a rotary wing or a fixed wing. The "quantity of propellers" is the quantity of propellers provided in the drone 2 and used for flight. For example, in the case of what is called a hexacopter, the quantity is "6", and in the case of an octocopter, the quantity is "8". "Weight" is the total weight of the drone.

The computing device 11 can obtain the downdraft of the drone 2 from at least one among the type of the drone 2, the quantity of propellers, and the weight. Therefore, the computing device 11 extracts a plurality of spatial regions serving as the flight targets of the flight vehicle using the obtained downdraft. In addition, the computing device 11 changes the status of the spatial region of the flight target and the peripheral spatial region affected by the flight of the drone 2 according to the obtained downdraft.

For example, regarding the drone 2 which affects the spatial region in the lower layer, the computing device 11 can extract the spatial region affected by the downdraft as the flight region of the target drone 2 only when the spatial region affected by the downdraft is not the flight target of another drone 2. In addition, in a case of extracting the flight region of the drone 2 that affects the spatial region in the lower layer, the computing device 11 sets the spatial region in the lower layer that is affected to the status of flight prohibition for a period in which there is a possibility of being affected by the flight of the drone 2. This makes it possible to prevent the influence of the downdraft among the plurality of drones 2.

### <<Size>>

The drone conditions may include the size of the drone 2. The "size of the drone" may be, for example, the size of the drone represented by the length, the width, and the height, or the size of the drone represented by the outer diameter. The computing device 11 obtains the occupancy rate in each direction of xyz directions of the spatial region required for the flight of the drone 2 according to the size of the drone 2 and extracts a plurality of spatial regions serving as the flight target in consideration of the obtained occupancy rate. Specifically, when the length of the drone 2 is long, the number in the x direction of the spatial region serving as the flight target can be increased and adjusted. In addition, when the lateral width of the drone 2 is long, the number in the y direction of the spatial regions serving as the flight target can be increased and adjusted. Furthermore, when the height of the drone 2 is tall, the number in the z direction of the spatial regions serving as the flight target can be increased and adjusted. It should be noted that the number in the x direction in the flight direction can also depend on the braking distance of the drone 2.

### <<Piloting Method>>

The conditions of the drone may include a piloting method of the drone 2. Specifically, the "piloting method" may include manual piloting and automatic piloting. Here, "manual piloting" is the case when the operator remotely pilots all movements of the drone 2 using the transmitter and the drone 2 flies in accordance with the signal received from the transmitter. In addition, "automatic piloting" is the case where the drone 2 grasps the current location using the GPS system and/or the self-position estimation system and automatically flies to the destination. When the flight is made with automatic piloting, in the case of automatic piloting, since the flight speed is constant, the spatial region of the flight target is determined according to the set speed of the drone 2. On the other hand, in the case of manual piloting, it is difficult to fly the drone 2 at a constant speed as compared with the case of automatic piloting. Therefore, when the drone 2 is manually piloted, the computing device 11 changes the status of a wide spatial region as compared with when the drone 2 is automatically piloted. For example, even when three continuous spatial regions at each timing are secured as flight targets when the drone 2 is in the automatic piloting, five continuous spatial regions at each timing may be set as flight targets by adjusting in consideration of speed variations in the case of the manual piloting. It should be noted that when the flight speed is high, the spatial region of the flight target is increased. In addition, not only the continuous spatial regions with the front-rear direction as a reference but also the continuous spatial regions in the vertical direction and the left-right direction can be similarly widely adjusted.

### <<Sensor>>

The conditions of the drone 2 may include the presence or absence of a specific sensor or the type of the retained sensor. The sensor is, for example, an inertial measurement unit (IMU) including sensors such as acceleration and angular acceleration for the purpose of stabilizing flight, or simultaneous localization and mapping (SLAM) by a sensor such as LiDAR or ToF used for obstacle detection or the like. In addition, the sensor may be a barometric sensor for the purpose of maintaining the altitude. The computing device 11 executes PID control using the extended Kalman filter by using the values obtained by the plurality of sensors. In the case of a drone without a sensor, there is a possibility that the flight becomes unstable as compared with a drone with a sensor. Therefore, it is necessary to increase the spatial region to be secured as compared with the case of a drone with a sensor. Therefore, since it is possible to control the deviation from the flight route of the drone 2, it is possible to reduce the occupied area, that is, the number of spatial regions to be extracted as flight targets. Therefore, when the drone 2 does not include a specific sensor, the computing device 11 extracts a wide spatial region as a flight target per unit time as compared with a case where the drone 2 includes a specific sensor.

### <<Camera>>

The conditions of the drone 2 may include the presence or absence of a specific sensor. The computing device 11 enables the operator to perform control through the control terminal 3 using the image obtained by the camera. Therefore, since it is possible to control the deviation from the flight route of the drone 2, it is possible for the computing device 11 to reduce the occupied area, that is, the number of spatial regions to be extracted as flight targets. In other words, when the drone 2 does not include a camera, the computing device 11 extracts a wide spatial region as a flight target per unit time as compared with a case where the drone 2 includes a camera.

### <<Power Information>>

The conditions of the drone 2 can include power information used for predicting the flight time of the drone 2. The "power information" can include whether the hybrid battery is used and/or the remaining capacity of the battery. The computing device 11 can calculate the flyable time that is the time during which the drone 2 can fly, using the power information. The computing device 11 can calculate the distance that the drone 2 can fly using the flyable time and the flight speed that is the performance of the drone 2. Therefore, the computing device 11 determines whether the drone 2 can fly from the departure point to the destination. In addition, when determining that the drone 2 cannot fly to the destination, the computing device 11 can transmit an alert signal to the effect that the drone 2 cannot fly to the control terminal 3 through the communication device 13.

### <<Environmental Information>>

The computing device 11 can receive the environmental information of the spatial region from the information provision device 6 through the communication device 13. For example, the environmental information includes information indicating a specific space and information regarding an environment that has occurred and/or can occur in the space. At this time, the specific space may be a range that affects the flight of the drone 2. For example, when a strong wind occurs in a certain space, the environmental information associates information indicating a range in which strong wind occurs with information indicating that strong wind occurs. In addition, for example, when a fire has occurred in a certain space, the environmental information associates information indicating that the fire has occurred with information indicating a range affecting the flight of the drone 2 by the fire.

The computing device 11 determines a condition of passing through the spatial region using the received environmental information. In addition, the computing device 11 can acquire a condition for specifying the performance of the drone 2. Specifically, even in the same environmental information, the availability of flight varies depending on the performance of the drone 2. Take wind speed as an example, the maximum wind pressure resistance varies for each performance of the drone. In such a case, when the wind speed of a specific space is included in the environmental information, the condition of the drone 2 capable of flying in the space is determined. Therefore, the computing device 11 can compare this condition with the acquired performance of the drone 2 to determine whether each drone 2 can fly in a specific spatial region. Therefore, the computing device 11 can extract the spatial region of the flight target according to the performance of the drone 2. Thereafter, the computing device 11 updates the status of the spatial region of the status data 122 according to the determined passing condition with the conditions of the drone as a reference.

### <<Authority>>

The conditions of the flight vehicle may include the authority to fly in a specific spatial region. Depending on the spatial region, there is a zone where the flight of the drone 2 is prohibited or restricted, and there is a zone where only the permitted drone 2 can fly. As described above, such a spatial region is defined by the status data 122. Therefore, the computing device 11 extracts a spatial region serving as a flight target of the flight vehicle according to the authority of the flight. For example, when the computing device 11 detects the authority to permit the flight of the drone 2 from the condition data for a specific spatial region, this spatial region can be extracted as a flight target.

### <<Priority Flight>>

The conditions of the drone 2 may include whether the drone 2 is a priority aircraft. For example, the conditions of the drone 2 includes the presence or absence of priority flight of the drone 2. The "priority aircraft" is, for example, a flight vehicle that has urgency for humanitarian assistance or the like and is preferable to fly preferentially. For example, a manned flight vehicle may be used as the priority aircraft. In the current status data 122, even with a spatial region already allocated as a flight route to another drone 2, the computing device 11 can update the status data 122 for the drone 2 of the priority aircraft in order to change the current flight route of the other drone 2 other than the priority aircraft and cause the drone 2 to fly preferentially. That is, when a flight route of the drone 2 is newly generated, when the drone 2 is a priority aircraft, the computing device 11 extracts also a spatial region already extracted as a flight target of another drone 2 in the status data 122 as a flight target of the drone 2 that is the priority aircraft. In addition, while the drone 2 which is the priority aircraft passes through the spatial region allocated to another drone 2, the other drone 2 waits by hovering in the spatial region in proximity, and after the drone 2 which is the priority aircraft passes, the other drone 2 returns to the original spatial region and resumes flight. In addition, in the priority aircraft, a priority level is set, and the computing device 11 can preferentially fly the drone 2 having a higher priority level. For example, when a manned aircraft and an unmanned aircraft fly, the manned aircraft may be set as the priority aircraft. It should be noted that, for the drone 2 which is not the priority aircraft, the computing device 11 generates a route so as to fly by avoiding a spatial region earlier set as a flight route of another drone 2 or waiting for another drone 2 to pass through.

In addition, the flight route generation device 10 may receive the "registration number of the drone" or "operator identification information (for example, name, license number, and the like)". The computing device 11 determines the appropriateness/inappropriateness of the received registration number and identification information. Accordingly, when the drone 2 itself is not registered or when the operator is not appropriate, the flight of the drone 2 can be rejected.

### <Control Terminal>

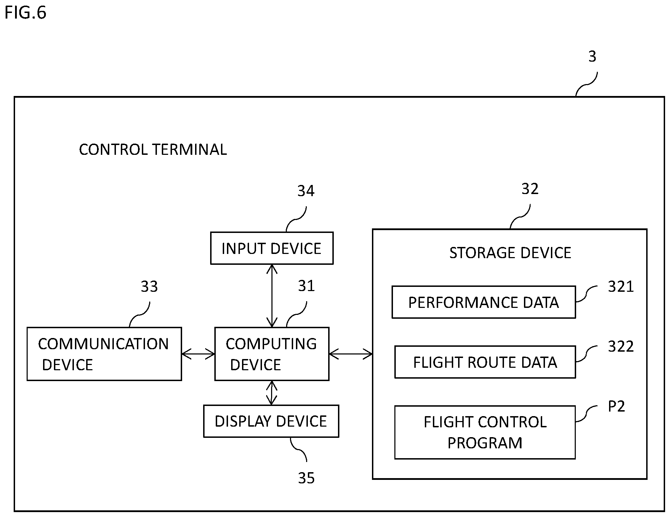

As shown in Fig. 6, the control terminal 3 includes a computing device 31, a storage device 32, a communication device 33, an input device 34, and a display device 35. The computing device 31 is a controller similar to the computing device 11 described above with reference to Fig. 2.

The storage device 32 is a recording medium similar to the storage device 12 described above with reference to Fig. 2. For example, a flight control program P2 which is a computer program executed by the computing device, performance data 321 indicating the performance or the like of the drone 2 of the control target, and flight route data 322 indicating the flight route of the drone 2 of the control target generated by the flight route generation device 10 are stored.

The communication device 33 transmits and receives wireless signals to and from the drone 2 of the operation target. In addition, the communication device 33 transmits and receives signals to and from the flight management device 5 via the network N.

The input device 34 is an operation lever used for inputting an operation signal for controlling the drone 2. The display device 35 is a display capable of displaying information necessary for operation. The display device 35 may be integrated with the control terminal 3 or may be detachable. In addition, for example, a display included in a communication device such as a smartphone can be used as the display device 35.

The computing device 31 transmits a generation request for a flight route through the communication device 33 according to an operation by an operator at a timing of controlling the flight of the drone 2. The generation request for a flight route includes a departure point and a destination of the drone 2 of the control target, and conditions of the flight vehicle. As described above with reference to Fig. 5, the conditions of the flight vehicle can include, for example, the flight purpose, the desired flight time, the load, the type/propeller quantity/weight, the size, the piloting method, the presence or absence of a sensor, the presence or absence of a camera, the power type, the environmental information, the authority, or the presence or absence of priority flight. These pieces of information are included in the performance data 321.

When receiving the flight route data 322 generated by the flight route generation device 10 of the flight management device 5 through the communication device 33, the computing device 31 displays information on the spatial region of the flight target and the spatial region in proximity included in the received flight route data 322 on the display device 35. The information regarding the spatial region of the flight target and the spatial region in proximity may be capable of distinguishing and displaying the status of each spatial region. For example, as shown on a display screen W in Fig. 7, the computing device 31 can superimpose information received from the flight route generation device 10 on an image captured by a camera mounted on the drone 2 and display the superimposed image on the display device 35. For example, the display screen W shows the flight route of the drone 2, the region where the flight of the drone 2 is prohibited, and the like in different states from the viewpoint of the camera mounted on the drone 2. For example, the display screen W is distinguished by different colors such as indicating the "no-fly zone" in red and indicating the "flight region of another drone" in blue. By displaying such a display screen W, it is possible to make it easy for the operator to grasp the flight route and improve the operability of the operator.

### <Frequency Band of Wireless Communication>

The frequency of the wireless communication used by the network N used for transmission of a signal from the information provision device 6 to the control terminal 3, the flight control device 4, and the flight operation management device 5 may be, for example, a frequency generally used exclusively for a drone or a robot, specifically, 2.4835 to 2.494 GHz, or more specifically, 2.4 GHz. In addition, the frequency of the wireless communication used in the network N may be generally a frequency used for piloting the drone, specifically, 68 to 74.8 MHz, and more specifically, 73 MHz. Furthermore, the frequency of the wireless communication used in the network N may be a frequency generally used for TV broadcasting including data broadcasting, area broadcasting, or the like, specifically, 470 to 710 MHz, or more specifically, 527 MHz. In addition, the frequency of wireless communication used in the network N may be a frequency generally used in a wireless LAN, specifically, 2400 to 2497 MHz, or more specifically, 2400 MHz. In addition, Fig. 8 shows frequencies that can be thought to be available in wireless communication used in the network N.

As shown in Fig. 8, public wireless communication may be available to the network N instead of dedicated wireless communication. For example, by using public wireless communication that is not currently used, the provision of a flight route to the control terminal 3 by the flight route generation device 10 can be achieved using existing equipment without installing new equipment for communication. It should be noted that the public wireless communication can also include communication using a communication satellite.

### <Flight Route Generation Method>

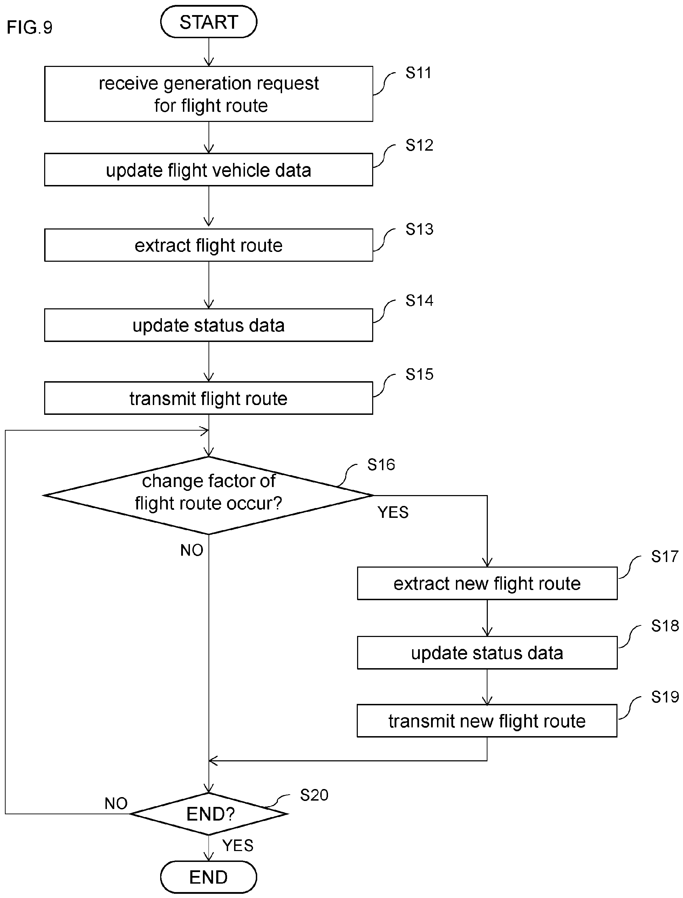

A flight route generation method executed by the flight route generation device 10 will be described with reference to a flowchart shown in Fig. 9. The generation of the flight route described here is processing executed on one drone 2. The flight route generation device 10 executes flight routes on a plurality of drones 2. Therefore, the flight route generation device 10 executes the processing described in the flowchart in Fig. 9 for each drone 2 serving as the target of the generation of a flight route. It should be noted that in the following description, details overlapping with the contents described with reference to Fig. 2 will be described in a simplified manner.

The communication device 13 receives the generation request for the flight route transmitted from the control terminal 3 (S11). The generation request includes conditions of the drone 2 which is the target of the control by the control terminal 3.

The computing device 11 updates the flight vehicle data 124 stored in the storage device 12 by adding the conditions of the drone 2 included in the generation request received in step S11 (S12).

The computing device 11 reads the spatial region data 121, the status data 122, and the environmental data 123 from the storage device 12, and extracts a flight route according to the conditions of the drone 2 included in the generation request received in step S11 (S13).

The computing device 11 updates the status data 122 stored in the storage device 12 according to the flight route of the drone 2 extracted in step S13 (S14).

The communication device 13 transmits the flight route of the drone 2 extracted in step S13 to the control terminal 3 (S15).

Thereafter, if a change factor of the flight route occurs (YES in S16), the computing device 11 extracts a new flight route of the drone 2 (S17). The occurrence of a change factor of the flight route is, for example, "reception of new environmental information". In addition, for example, "reception of a generation request from a priority aircraft" can also be the occurrence of a change factor of the flight route.

The computing device 11 updates the status data 122 stored in the storage device 12 according to a new flight route of the drone 2 extracted in step S17 (S18).

The communication device 13 transmits the new flight route of the drone 2 extracted in step S17 to the control terminal 3 (S19).

In addition, while the flight of the drone 2 continues, the processing of steps S16 to S19 is repeated. Accordingly, the flight route generation device 10 can continue providing a safe flight route to the control terminal 3 of the drone 2. Therefore, the drone 2 can safely continue the flight even when the environment or the like changes.

It should be noted that the order of each piece of processing shown in Fig. 9 is an example, and the present invention is not limited thereto. Therefore, a plurality of steps may be executed simultaneously. In addition, in the flight route generation device 10, processing not shown in Fig. 9 can also be executed simultaneously. For example, the communication device 13 receives the environmental information transmitted from the information provision device 6 at any time. In addition, the computing device 11 adds new environmental information received by the communication device 13 and updates the environmental data 123 stored in the storage device 12. As described above in step S16, the update of the environmental data 123 can be a change factor in the flight route.

### <Modifications>

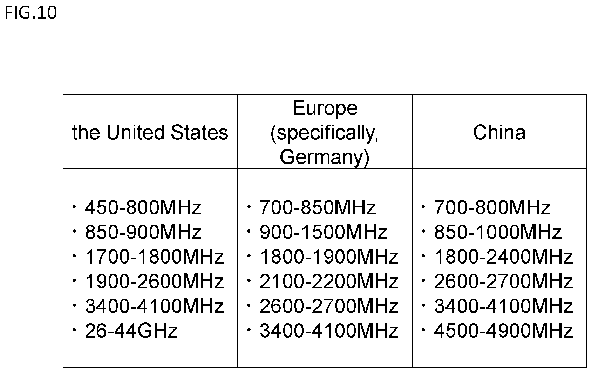

The example of the frequency band described above with reference to Fig. 8 has been described using an example used in Japan. On the other hand, the frequency band to be used is different for each country. Therefore, it is considered that the frequency of the radio signal used by the network N to transmit signals from the information provision device 6 to the control terminal 3, the flight control device 4, and the flight management device 5 is also different for each country. For example, in each country, it is conceivable that the network N uses a frequency band such as a frequency used for piloting a drone, a frequency used for TV broadcasting or the like, and a frequency used in a wireless LAN. Fig. 10 shows an example of frequency bands, in the United States, Europe (specifically, Germany), and China, when bands used for 4G (LTE) and 5G are used in the network N.

### <Supplement>

(1) A route generation device is a route generation device that includes a computing device and a storage device and generates a movement route of a mobile body, the route generation device comprising:
   the storage device configured to store:
   region data formed by a plurality of spatial regions configured to serve as a movement route of a mobile body, and
   status data indicating a status used to determine whether movement is possible at each timing in each of the spatial regions; and
   the computing device configured to execute:
      a step of receiving, through a receiving means, a departure point and a destination of a mobile body, and conditions of the mobile body including at least information for specifying a travel speed,
      a step of extracting, as a movement route, a plurality of spatial regions including a route from the departure point to the destination for the mobile body under the conditions,
      a step of changing a status of a spatial region extracted as a movement route of the mobile body in the status data in consideration of each timing according to a travel speed of the mobile body, and
      a step of transmitting, through a transmission means, information on a spatial region of the movement route and a spatial region in proximity in association with each of the timings to a control device of the mobile body.
(2) A route generation device is a route generation device that includes a computing device and a storage device and generates a movement route of a mobile body, the route generation device comprising:
   the storage device configured to store:
   region data formed by a plurality of spatial regions configured to serve as a movement route of a mobile body, and
   status data indicating a status used to determine whether movement is possible at each timing in each of the spatial regions; and
   the computing device configured to execute:
      a step of receiving, through a receiving means, a departure point and a destination of a mobile body, and conditions of the mobile body including at least information for specifying a travel speed,
      a step of referring to the region data and the status data, extracting a plurality of continuous spatial regions available for movement of a mobile body under the conditions from the departure point to the destination, and generating a movement route,
      a step of changing a status for distinguishing between movability and non-movability at each timing in a plurality of spatial regions extracted as a movement route of the mobile body in the status data in consideration of each timing according to a travel speed of the mobile body, and
      a step of transmitting, to a control device of the mobile body through a transmission means, information on a spatial region and a spatial region in proximity, of the movement route defined by the extracted movement route and the status data in association with each of the timings.
(3) A route generation device is a route generation device that includes a computing device and a storage device and generates a movement route of a drone that is a mobile body, the route generation device comprising:
   the storage device configured to store:
   region data formed by a plurality of spatial regions configured to serve as a movement route of a drone, and
   status data that is set according to at least presence or absence of flight of a drone and environment, distinguishes at least movability or non-movability at each timing in each of the spatial regions, and indicates a status used to determine whether movement is possible,
   wherein each spatial region of the region data is represented by a curve according to a ground condition, and
   the status data is updated in accordance with a change in the environment; and
   the computing device configured to execute:
      a step of receiving, through a receiving means, a departure point and a destination of a drone, and conditions of the drone including at least information for specifying a travel speed,
      a step of referring to the region data and the status data, extracting a plurality of continuous spatial regions available for movement of a drone under the conditions from the departure point to the destination, and generating a movement route,
      a step of changing a status for distinguishing between movability and non-movability at each timing in a plurality of spatial regions extracted as a movement route of the drone in the status data in consideration of each timing according to a travel speed of the drone, and
      a step of transmitting as flight data, to a control device of the drone through a transmission means, information on a spatial region and a spatial region in proximity, of the movement route defined by the extracted movement route and the status data in association with each of the timings.
(4) In the route generation device according to (1) or (2), the status may at least distinguish between movability and non-movability.
(5) In the route generation device according to any one of (1) to (4), conditions of the mobile body may include a moving purpose of the mobile body, and
   the computing device
   may extract a spatial region corresponding to the moving purpose as the movement route.
(6) In the route generation device according to any one of (1) to (5), the mobile body may be a flight vehicle,
   conditions of the mobile body may include at least ant one of a type of the mobile body, a quantity of propellers of the mobile body, or a weight of the mobile body, and
   the computing device:
      may extract, in the extracting step, a plurality of spatial regions serving as a movement route of the mobile body according to a downdraft specified from at least one of the type, the quantity of the propellers, or the weight, and
      may change, in the changing step, a status of a peripheral spatial region affected by a flight of the mobile body together with a spatial region of the movement route according to a specified downdraft.
(7) In the route generation device according to any one of (1) to (6), conditions of the mobile body may include a size of a mobile body, and
   the computing device may extract, in the extracting step, a plurality of spatial regions serving as the movement route according to the size.
(8) In the route generation device according to any one of (1) to (7), conditions of the mobile body may include a piloting method of the mobile body, and
   when the mobile body is manually piloted,
   the computing device may extract, in the extracting step, a wider spatial region as a movement route for each time unit as compared with a case of automatic piloting.
(9) In the route generation device according to any one of (1) to (8), conditions of the mobile body may include presence or absence of a specific sensor or a type of retained sensor, and
   when the mobile body does not include a specific sensor,
   in the extracting step, the computing device may extract a wider spatial region as a movement route for each time unit as compared with a case where the specific sensor is provided.
(10) In the route generation device according to any one of (1) to (9), conditions of the mobile body may include presence or absence of a camera, and
   when the mobile body does not include a camera, in the extracting step,
   the computing device may extract a wider spatial region as a movement route for each time unit as compared with a case where a camera is provided.
(11) In the route generation device according to any one of (1) to (10), conditions of the mobile body may include power information used to predict a moving time of the mobile body, and
   the computing device
   may execute a step of determining whether the mobile body can reach the destination from the departure point from a movable time of the mobile body predicted based on the power information, and transmitting an alert signal when it is determined that the mobile body cannot reach the destination.
(12) In the route generation device according to any one of (1) to (11), the computing device may further include:
   a step of receiving environmental information of the spatial region through the receiving means,
   a step of determining conditions of passing of the spatial region using the environmental information, and
   a step of updating a status of the spatial region of the status data according to the determined passing conditions.
(13) In the route generation device according to any one of (1) to (12), conditions of the mobile body may include an authority to move in a specific spatial region, and
   the computing device may extract, in the extracting step, a spatial region serving as a movement route of the mobile body according to the authority to move.
(14) In the route generation device according to any one of (1) to (13), conditions of the mobile body may include whether the mobile body is a priority aircraft,
   when the mobile body is a priority aircraft, the computing device may extract, in the extracting step, a spatial region already set as a movement route of another mobile body in the status data as a movement route of the mobile body that is a priority aircraft, and
   the computing device may further execute
   a step of changing a movement route currently set in the other mobile body other than a priority aircraft and updating the status data.
(15) In the route generation device according to any one of (1) to (14), the computing device may extract, in the extracting step, a spatial region serving as a movement route of the mobile body at a position separated by a predetermined distance from a spatial region serving as a movement route of another mobile body.
(16) In the route generation device according to any one of (1) to (15), when a traveling direction of the mobile body is an x direction, a direction crossing the traveling direction is a y direction, and a height direction from the ground is a z direction, in each of the spatial region, the x direction may be at least 20 m or more, the y direction may be at least 3 m or more, and the z direction may be at least 4 m or more as a reference.
(17) In the route generation device according to any one of (1) to (16), a movement route formed by the plurality of continuous spatial regions may be formed by a smooth curve in which a curve in a vertical direction is represented by a vertical curve corresponding to a shape of an obstacle on a ground, and a curve in a horizontal direction is represented by a clothoid curve corresponding to a shape of a flyable region.
(18) In the route generation device according to any one of (1) to (17), the receiving means may receive the environmental information at a predetermined frequency.
(19) A route generation method is a route generation method executed by a route generation device that includes a computing device and a storage device and generating a movement route of a mobile body, the route generation method comprising:
   storing by a storage device:
   spatial region data formed by a plurality of spatial regions configured to serve as a movement route of a mobile body, and
   status data indicating a status used to determine whether movement is possible at each timing in each of the spatial regions; and
   a step, executed in the computing device, of receiving, through a receiving means, a departure point and a destination of a mobile body, and conditions of the mobile body including at least information for specifying a travel speed,
   a step, executed in the computing device, of extracting, as a movement route, a plurality of spatial regions including a route from the departure point to the destination for the mobile body under the conditions,
   a step, executed in the computing device, of changing a status of a spatial region extracted as a movement route of the mobile body in the status data in consideration of each timing according to a travel speed of the mobile body, and
   a step, executed in the computing device, of transmitting, through a transmission means, information on a spatial region of the movement route and a spatial region in proximity in association with each of the timings to a control device of the mobile body.
(20) A computer program for executing the route generation method according to (19).
(21) A mobile body management system is a mobile body management system including a route generation device that generates a movement route of a mobile body and a control device used for control of movement of the mobile body, the mobile body management system comprising:
   a storage device of the route generation device configured to store:
   spatial region data formed by a plurality of spatial regions configured to serve as a movement route of a mobile body, and
   status data indicating a status used to determine whether movement is possible at each timing in each of the spatial regions;
   a computing device of the route generation device configured to execute:
      a step of receiving, through a receiving means, a departure point and a destination of a mobile body, and conditions of the mobile body including at least information for specifying a travel speed,
      a step of extracting, as a movement route, a plurality of spatial regions including a route from the departure point to the destination by a mobile body under the conditions,
      a step of changing a status of a spatial region extracted as a movement route of the mobile body in the status data in consideration of each timing according to a travel speed of the mobile body, and
      a step of transmitting, through a transmission means, information on a spatial region of the movement route and a spatial region in proximity in association with each of the timings to a control device of the mobile body; and
      a computing device of the control device configured to execute:
         a step of receiving information about the spatial region, and
         a step of distinguishing a status of each of the spatial regions included in information regarding the spatial region for each type to cause a display device to display the status.
(22) In the mobile body management system according to (21), the mobile body management system may include an information provision device that provides environmental information corresponding to a moving environment of the mobile body to the route generation device and the control device, and
   when receiving the environmental information through the receiving means, a computing device of the route generation device may update the status data in accordance with the environmental information.
(23) In the mobile body management system according to (22), the information provision device may provide the environmental information to the flight route generation device and the control device using a predetermined frequency band.
(24) The mobile body management system according to any one of (21) to (23) may manage a mobile body on which an application program of an identical standard is mounted.

As described above, by generating the route of the flight vehicle using the flight route generation device and the flight route generation method of the present disclosure, the flight of each flight vehicle can be managed, and the safety of the flight can be achieved, for example, the collision between the flight vehicles can be prevented, or the flight can be performed while avoiding the no-fly zone. In addition, if the flight route generation device and the flight route generation method enable the operator of the flight vehicle to check the status of the spatial region serving as the flight route and the peripheral spatial region, the operator can safely operate the flight vehicle even if the operator controls the flight vehicle at a position away from the flight vehicle. Furthermore, when any change occurs in the flight region by the flight route generation device and the flight route generation method, it is possible to achieve the safety of the flight of the flight vehicle by correcting the flight route in accordance with the change. It should be noted that in the above example, the drone is taken as an example, but the flight vehicle is not limited to the drone. For example, the mobile body targeted by the route generation device and the like of the present disclosure may be a flight vehicle such as a helicopter or an airship in addition to a drone. In addition, even for a mobile body other than the flight vehicle, the moving safety of the mobile body can be achieved by a movement route being similarly generated. For example, a mobile body that is a target of generating a movement route by the movement route generation device or the like of present disclosure may be, in addition to a mobile body that three-dimensionally moves in the air like a drone, a mobile body that can move in a range where a general road, a railroad track, or the like is not defined, such as a large-scale agricultural field or an untapped grassland. Specifically, the route generation device or the like of the present disclosure may generate a movement route of a ship or the like moving on the sea surface or an underwater line or the like moving in the sea. In addition, by utilizing the fact that the movement route generated by the present device is three-dimensional, a movement route in which passengers and products can be transported comfortably and safely while avoiding, for example, a road with severe up-and-down, a road having a steep curve, a mountain pass that needs to ascend to high ground, and the like may be generated also for a general mobile body running on the ground.

A route generation device and a route generation method described in all claims of the present disclosure are implemented by cooperation with hardware resources, for example, a processor, a memory, and a program.

### INDUSTRIAL APPLICABILITY

The route generation device, the route generation method, the computer program, and the mobile body management system of the present disclosure are useful for achieving safe movement of the mobile body, for example.

### REFERENCE SIGNS LIST

- 1: Aerial management system
- 2 (2A, 2B): Drone
- 3 (3A, 3B): Control terminal (control device)
- 31: Computing device
- 32: Storage device
- 33: Communication device
- 34: Input device
- 35: Display device
- 321: Performance data
- 322: Flight route data
- P2: Flight control program
- 4 (4A): Flight control device
- 5: Flight management device
- 6: Information provision device
- 7: Flight management integration device
- 8: Flight system
- 10: Flight route generation device
- 11: Computing device
- 12: Storage device
- 13: Communication device (receiving means, transmitting means)
- 121: Spatial region data
- 122: Status data
- N: Network

## Claims

1. A route generation device that includes a computing device and a storage device and generates a movement route of a mobile body, the route generation device comprising:
the storage device configured to store:
region data formed by a plurality of spatial regions configured to serve as a movement route of a mobile body, and
status data indicating a status used to determine whether movement is possible at each timing in each of the spatial regions; and
the computing device configured to execute:
a step of receiving, through a receiving means, a departure point and a destination of a mobile body, and conditions of the mobile body including at least information for specifying a travel speed,
a step of extracting, as a movement route, a plurality of spatial regions including a route from the departure point to the destination for the mobile body under the conditions,
a step of changing a status of a spatial region extracted as a movement route of the mobile body in the status data in consideration of each timing according to a travel speed of the mobile body, and
a step of transmitting, through a transmission means, information on a spatial region of the movement route and a spatial region in proximity in association with each of the timings to a control device of the mobile body.

2. A route generation device that includes a computing device and a storage device and generates a movement route of a mobile body, the route generation device comprising:
the storage device configured to store:
region data formed by a plurality of spatial regions configured to serve as a movement route of a mobile body, and
status data indicating a status used to determine whether movement is possible at each timing in each of the spatial regions; and
the computing device configured to execute:
a step of receiving, through a receiving means, a departure point and a destination of a mobile body, and conditions of the mobile body including at least information for specifying a travel speed,
a step of referring to the region data and the status data, extracting a plurality of continuous spatial regions available for movement of a mobile body under the conditions from the departure point to the destination, and generating a movement route,
a step of changing a status for distinguishing between movability and non-movability at each timing in a plurality of spatial regions extracted as a movement route of the mobile body in the status data in consideration of each timing according to a travel speed of the mobile body, and
a step of transmitting, to a control device of the mobile body through a transmission means, information on a spatial region and a spatial region in proximity, of the movement route defined by the extracted movement route and the status data in association with each of the timings.

3. A route generation device that includes a computing device and a storage device and generates a movement route of a drone, the route generation device comprising:
the storage device configured to store:
region data formed by a plurality of spatial regions configured to serve as a movement route of a drone, and
status data that is set according to at least presence or absence of flight of a drone and environment, distinguishes at least movability or non-movability at each timing in each of the spatial regions, and indicates a status used to determine whether movement is possible,
wherein each spatial region of the region data is represented by a curve according to a ground condition, and
the status data is updated in accordance with a change in the environment; and
the computing device configured to execute:
a step of receiving, through a receiving means, a departure point and a destination of a drone, and conditions of the drone including at least information for specifying a travel speed,
a step of referring to the region data and the status data, extracting a plurality of continuous spatial regions available for movement of a drone under the conditions from the departure point to the destination, and generating a movement route,
a step of changing a status for distinguishing between movability and non-movability at each timing in a plurality of spatial regions extracted as a movement route of the drone in the status data in consideration of each timing according to a travel speed of the drone, and
a step of transmitting as flight data, to a control device of the drone through a transmission means, information on a spatial region and a spatial region in proximity, of the movement route defined by the extracted movement route and the status data in association with each of the timings.

4. The route generation device according to claim 1,
wherein the status at least distinguishes between movability and non-movability.

5. The route generation device according to claim 1,
wherein conditions of the mobile body include a moving purpose of the mobile body, and
the computing device
extracts a spatial region corresponding to the moving purpose as the movement route.

6. The route generation device according to claim 1,
wherein the mobile body is a flight vehicle,
conditions of the mobile body include at least ant one of a type of the mobile body, a quantity of propellers of the mobile body, or a weight of the mobile body, and
the computing device:
extracts, in the extracting step, a plurality of spatial regions serving as a movement route of the mobile body according to a downdraft specified from at least one of the type, the quantity of the propellers, or the weight, and
changes, in the changing step, a status of a peripheral spatial region affected by a flight of the mobile body together with a spatial region of the movement route according to a specified downdraft.

7. The route generation device according to claim 1,
wherein conditions of the mobile body include a size of a mobile body, and
the computing device
extracts, in the extracting step, a plurality of spatial regions serving as the movement route according to the size.

8. The route generation device according to claim 1,
wherein conditions of the mobile body include a piloting method of the mobile body, and
when the mobile body is manually piloted,
the computing device extracts, in the extracting step, a wider spatial region as a movement route for each time unit as compared with a case of automatic piloting.

9. The route generation device according to claim 1,
wherein conditions of the mobile body include presence or absence of a specific sensor or a type of retained sensor, and
when the mobile body does not include a specific sensor,
in the extracting step, the computing device extracts a wider spatial region as a movement route for each time unit as compared with a case where the specific sensor is provided.

10. The route generation device according to claim 1,
wherein conditions of the mobile body include presence or absence of a camera, and
when the mobile body does not include a camera,
in the extracting step, the computing device extracts a wider spatial region as a movement route for each time unit as compared with a case where a camera is provided.

11. The route generation device according to claim 1,
wherein conditions of the mobile body include power information used to predict a moving time of the mobile body, and
the computing device
executes a step of determining whether the mobile body can reach the destination from the departure point from a movable time of the mobile body predicted based on the power information, and transmitting an alert signal when it is determined that the mobile body cannot reach the destination.

12. The route generation device according to claim 1,
wherein the computing device further includes:
a step of receiving environmental information of the spatial region through the receiving means,
a step of determining conditions of passing of the spatial region using the environmental information, and
a step of updating a status of the spatial region of the status data according to the determined passing conditions.

13. The route generation device according to claim 1,
wherein conditions of the mobile body include an authority to move in a specific spatial region, and
the computing device
extracts, in the extracting step, a spatial region serving as a movement route of the mobile body according to the authority to move.

14. The route generation device according to claim 1,
wherein conditions of the mobile body include whether the mobile body is a priority aircraft,
when the mobile body is a priority aircraft, the computing device extracts, in the extracting step, a spatial region already set as a movement route of another mobile body in the status data as a movement route of the mobile body that is a priority aircraft, and
the computing device further
executes a step of changing a movement route currently set in the other mobile body other than a priority aircraft and updating the status data.

15. The route generation device according to claim 1,
wherein the computing device
extracts, in the extracting step, a spatial region serving as a movement route of the mobile body at a position separated by a predetermined distance from a spatial region serving as a movement route of another mobile body.

16. The route generation device according to claim 1,
wherein when a traveling direction of the mobile body is an x direction, a direction crossing the traveling direction is a y direction, and a height direction from the ground is a z direction, in each of the spatial region, the x direction is at least 20 m or more, the y direction is at least 3 m or more, and the z direction is at least 4 m or more as a reference.

17. The route generation device according to claim 1,
wherein a movement route formed by the plurality of continuous spatial regions is formed by a smooth curve in which a curve in a vertical direction is represented by a vertical curve corresponding to a shape of an obstacle on a ground, and a curve in a horizontal direction is represented by a clothoid curve corresponding to a shape of a flyable region.

18. The route generation device according to claim 12,
wherein the receiving means receives the environmental information at a predetermined frequency.

19. A route generation method executed by a route generation device that includes a computing device and a storage device and generating a movement route of a mobile body, the route generation method comprising:
storing by a storage device:
spatial region data formed by a plurality of spatial regions configured to serve as a movement route of a mobile body, and
status data indicating a status used to determine whether movement is possible at each timing in each of the spatial regions; and
a step, executed in the computing device, of receiving, through a receiving means, a departure point and a destination of a mobile body, and conditions of the mobile body including at least information for specifying a travel speed,
a step, executed in the computing device, of extracting, as a movement route, a plurality of spatial regions including a route from the departure point to the destination for the mobile body under the conditions,
a step, executed in the computing device, of changing a status of a spatial region extracted as a movement route of the mobile body in the status data in consideration of each timing according to a travel speed of the mobile body, and
a step, executed in the computing device, of transmitting, through a transmission means, information on a spatial region of the movement route and a spatial region in proximity in association with each of the timings to a control device of the mobile body.

20. A computer program for executing the route generation method according to claim 19.

21. A mobile body management system including a route generation device that generates a movement route of a mobile body and a control device used for control of movement of the mobile body, the mobile body management system comprising:
a storage device of the route generation device configured to store:
spatial region data formed by a plurality of spatial regions configured to serve as a movement route of a mobile body, and
status data indicating a status used to determine whether movement is possible at each timing in each of the spatial regions;
a computing device of the route generation device configured to execute:
a step of receiving, through a receiving means, a departure point and a destination of a mobile body, and conditions of the mobile body including at least information for specifying a travel speed,
a step of extracting, as a movement route, a plurality of spatial regions including a route from the departure point to the destination by a mobile body under the conditions,
a step of changing a status of a spatial region extracted as a movement route of the mobile body in the status data in consideration of each timing according to a travel speed of the mobile body, and
a step of transmitting, through a transmission means, information on a spatial region of the movement route and a spatial region in proximity in association with each of the timings to a control device of the mobile body; and
a computing device of the control device configured to execute:
a step of receiving information about the spatial region, and
a step of distinguishing a status of each of the spatial regions included in information regarding the spatial region for each type to cause a display device to display the status.

22. The mobile body management system according to claim 21,
wherein the mobile body management system includes an information provision device that provides environmental information corresponding to a moving environment of the mobile body to the route generation device and the control device, and
when receiving the environmental information through the receiving means, a computing device of the route generation device updates the status data in accordance with the environmental information.

23. The mobile body management system according to claim 22,
wherein the information provision device provides the environmental information to the route generation device and the control device using a predetermined frequency band.

24. The mobile body management system according to claim 21,
wherein the mobile body management system manages a mobile body on which an application program of an identical standard is mounted.
